Europäisches Patentamt

European Patent Office

Office européen des brevets

(19)

(11) Veröffentlichungsnummer: **0 214 669**
A2

(12) # EUROPÄISCHE PATENTANMELDUNG

(21) Anmeldenummer: 86112581.3

(51) Int. Cl.⁴: **B 60 P 1/52**

(22) Anmeldetag: 11.09.86

(30) Priorität: 11.09.85 DE 3532465

(43) Veröffentlichungstag der Anmeldung:
18.03.87 Patentblatt 87/12

(84) Benannte Vertragsstaaten:
AT BE CH DE FR GB IT LI LU NL SE

(71) Anmelder: Robert Nestler Wellpappenfabrik GmbH & Co.KG
Postfach 1905 Am Stadtpark 1
D-7630 Lahr/Schwarzwald(DE)

(72) Erfinder: Labusga, Hans-Jörg
Schlehenweg 20
D-7630 Lahr(DE)

(74) Vertreter: Klingseisen, Franz, Dipl.-Ing. et al,
Patentanwälte Dr. F. Zumstein Dr. E. Assmann Dipl.-Ing. F.
Klingseisen Bräuhausstrasse 4
D-8000 München 2(DE)

(54) Vorrichtung zum Transportieren von Stückgut.

(57) Um eine Ladefläche leichter be- und entladen zu können, wird eine in der Ladefläche versenkbare und in die Betriebsstellung ausfahrbare Transporteinrichtung vorgesehen, die es ermöglicht, das Ladegut auf der Ladefläche leicht von Hand zu verschieben.

*Fig. 1*

EP 0 214 669 A2

NESTLER WELLPAPPE, Lahr                                      40/em

### Vorrichtung zum Transportieren von Stückgut

Die Erfindung betrifft eine Vorrichtung zum Transportieren von Stückgut, Paletten und dergleichen, mit einer Ladefläche für die Auflage des zu transportierenden Guts.

Für den Transport von Stückgut auf der Ladefläche beispielsweise eines Lkw's ist es zum Be- und Entladen erforderlich, Pakete, Paletten und dergleichen mittels einer verfahrbaren Einrichtung anzuheben und mittels dieser an die gewünschte Stelle zu fahren. Dies ist einerseits zeitaufwendig und andererseits ist eine gesonderte verfahrbare Einrichtung erforderlich, die wiederum je nach Art und Gewicht des Transportgutes ausgelegt und an dieses angepaßt sein muß.

Der Erfindung liegt die Aufgabe zugrunde, eine Vorrichtung der eingangs angegebenen Art so auszubilden, daß das Be- und Entladen einer Ladefläche vereinfacht wird.

Diese Aufgabe wird durch die Merkmale im Kennzeichen des Anspruchs 1 gelöst. Durch die in der Ladefläche versenkt angeordnete Transporteinrichtung hat das Transportgut während des Transports einen festen Stand auf der Ladefläche, während zum Be- und Entladen durch Anheben der Transporteinrichtung oder Absenken der Ladefläche das Transportgut leicht von Hand auf der Transporteinrichtung verschoben werden kann, so daß ein separates Transportgerät entfällt und Verladezeit eingespart werden kann.

Vorteilhafte Ausgestaltungen der Erfindung sind in der nachfolgenden Beschreibung und in den weiteren Ansprüchen angegeben.

Beispielsweise Ausführungsformen der Erfindung werden nachfolgend anhand der Zeichnung näher erläutert. Es zeigen

Fig. 1     in einer perspektivischen Ansicht eine Ladefläche mit Transporteinrichtungen,

Fig. 2     einen schematischen Längsschnitt durch eine Transporteinrichtung nach Fig. 1,

Fig. 3     eine Seitenansicht eines zu beladenden Fahrzeugs,

Fig. 4     in einer Ansicht eine Einrichtung zur Höhenarretierung an einem Fahrzeug,

Fig. 5     in schematischer Schnittdarstellung eine Ausführungsform einer Transporteinrichtung,

Fig. 6     eine andere Ausführungsform einer Transporteinrichtung,

Fig. 7     einen Querschnitt durch eine Transporteinrichtung mit Abdeckung,

Fig. 8     eine Absturz-Sicherung in schematischer Darstellung, und

Fig. 9     eine weitere Ausführungsform einer Absturzsicherung.

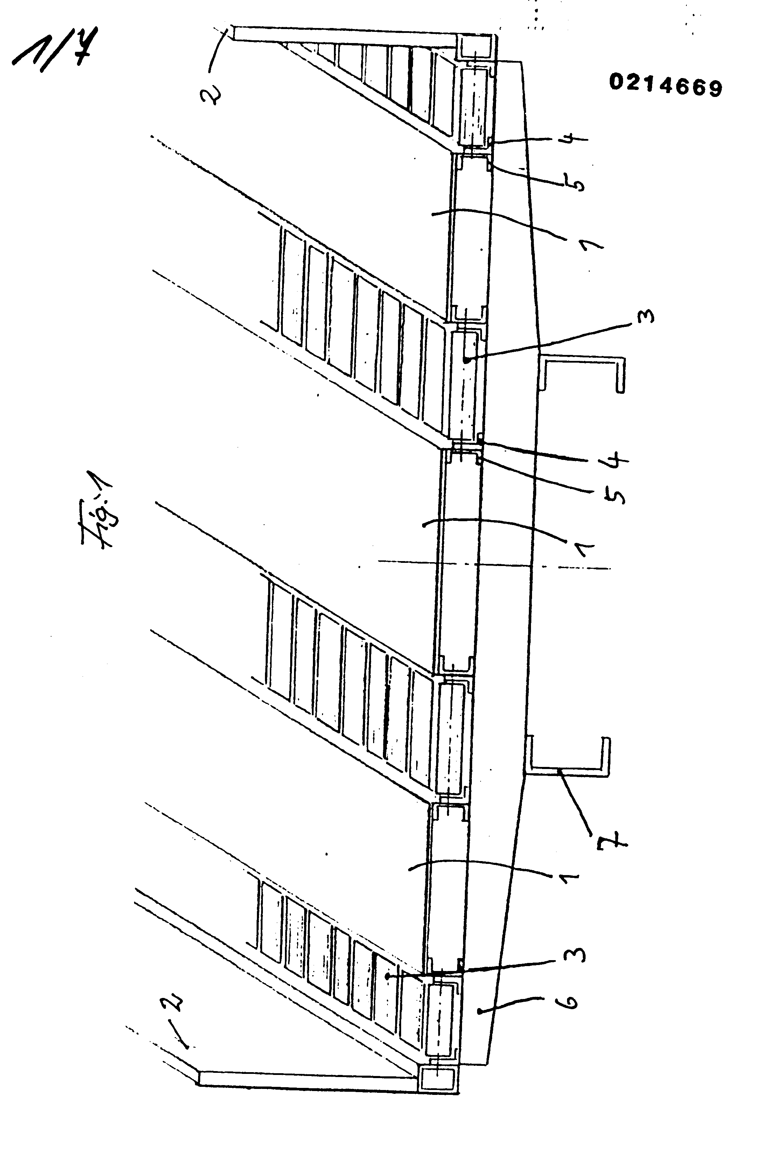

In Fig. 1 ist mit 1 die Ladefläche beispielsweise eines Lkw's bezeichnet, die seitlich von Ladebordwänden 2 begrenzt ist. In die Ladefläche 1 sind bandförmig ausgebildete Transporteinrichtungen 3 eingesetzt, die in einem Abstand voneinander über die Breite der Ladefläche 1 angeordnet sind und sich über die Länge der Ladefläche 1 erstrecken. Diese Transporteinrichtungen 3 können in der Form von hintereinander angeordneten Rollen, Gliederbändern, Ketten, Gleitkufen, Gleitbändern, Transportbändern, als Luftkissen und dergleichen ausgebildet sein, wobei sie so angeordnet sind, daß sie in der Außerbetriebsstellung mit der Oberfläche unter der Ebene der Ladefläche 1 liegen. Durch eine mechanische, hydraulische oder pneumatische Einrichtung können die Transporteinrichtungen 3 so weit angehoben werden, daß sie über die Ebene der Ladefläche 1 vorstehen, so daß das auf der Ladefläche abgestellte Transportgut bequem von Hand längs der Transporteinrichtungen 3 verschoben werden kann. Je nach Ausgestaltung können die Transporteinrichtungen längs oder quer zur Fahrtrichtung der Ladefläche eines Lkw's, Anhängers oder dergleichen angeordnet werden. Bei Ausgestaltung der Transporteinrichtung in Form von rasterförmig angeordneten Kugeln ist eine Verschiebung in allen Richtungen möglich. In diesem Falle können die Kugeln über die gesamte Ladefläche verteilt angeordnet sein.

Bei dem Ausführungsbeispiel nach Fig. 1 sind Rahmenteile 4 für die Transporteinrichtungen vorgesehen, die zwischen Rahmenteilen 5 der Ladefläche 1 angeordnet sind. Dieser Aufbau wird durch Querholme 6 abgestützt, die wiederum auf längsverlaufenden U-Schienen 7 aufliegen.

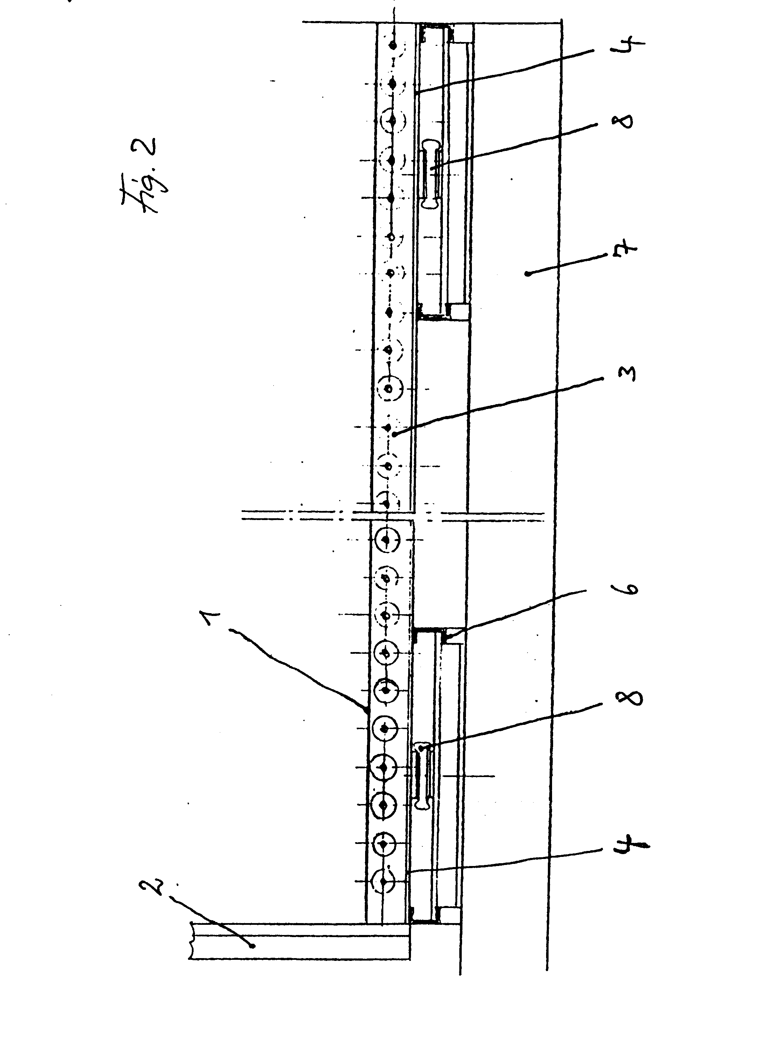

Fig. 2 zeigt einen Längsschnitt durch die Anordnung nach Fig. 1, wobei die Transporteinrichtung in Form von Rollen ausgebildet ist. Mit 8 ist eine Hubeinrichtung bezeichnet, die bei diesem Ausführungsbeispiel in Form eines Balges ausgebildet ist, der mit Druckluft beaufschlagt werden kann. In der dargestellten Außerbetriebsstellung liegen die Rollen der Transporteinrichtung 3 unterhalb der Ebene der Ladefläche 1. Werden die Balge der Hubeinrichtung 8 mit Druckluft beaufschlagt, so werden die Rahmenteile 4 mit den Rollen der Transporteinrichtung so weit angehoben, daß die Rollen etwas über die Ladefläche 1 vorstehen.

Als Hubeinrichtung kann auch ein Druckluftzylinder, ein Hydraulikzylinder, eine mechanische Hubeinrichtung beispielsweise mittels Exzentern, eine elektrische oder elektromechanische Einrichtung vorgesehen werden. Die Anhebung der Transporteinrichtung kann abschnittsweise oder über die gesamte Ladefläche einheitlich erfolgen.

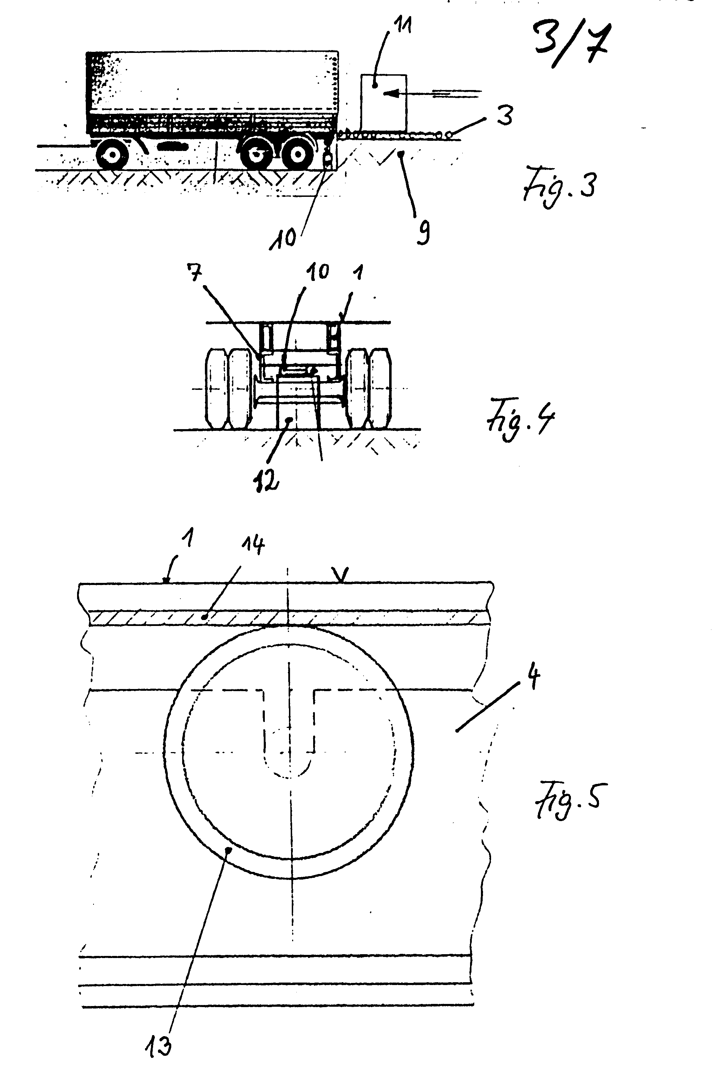

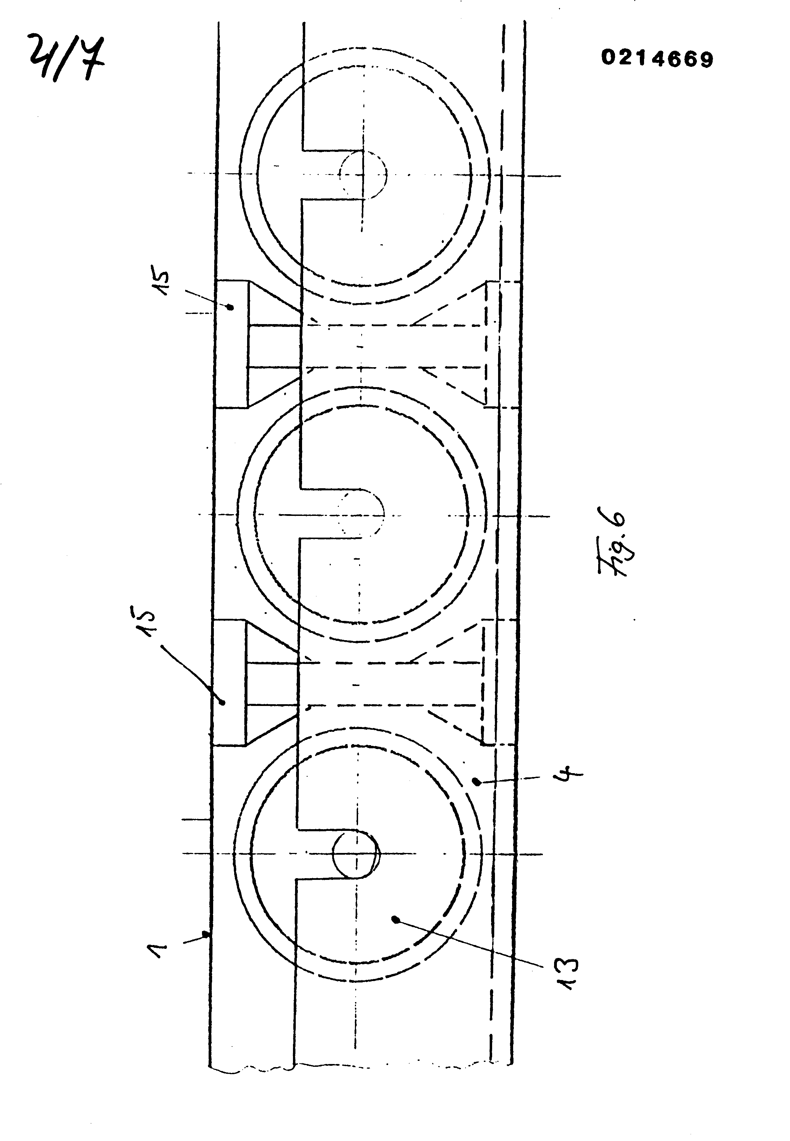

Fig. 3 zeigt einen Anhänger eines Lkw an einer Rampe 9, auf
der eine entsprechende Transporteinrichtung 3, beispielsweise
wie die in den Fig.1 und 2 wiedergegebene, angeordnet ist.
Am Beladeende des Anhängers ist eine Hubeinrichtung 10 angeordnet, mittels der die Ladefläche bzw. die in der Ladefläche angeordneten Transporteinrichtungen auf die gleiche Höhe eingestellt werden können wie die auf der Laderampe 9 angeordnete
Transporteinrichtung. Mit 11 ist Transportgut beim Beladen
des Anhängers bezeichnet. Wie Fig. 4 zeigt, kann am Ladeende
des Fahrzeugs oder Anhängers eine pneumatische, hydraulische,
elektrische oder mechanische Hubeinrichtung, bei dem dargestellten Ausführungsbeispiel ein Druckluftbalg, vorgesehen
sein, der sich auf einem Sockel 12 abstützt und die Ladefläche 1 des Fahrzeugs auf die gewünschte Höhe anhebt.

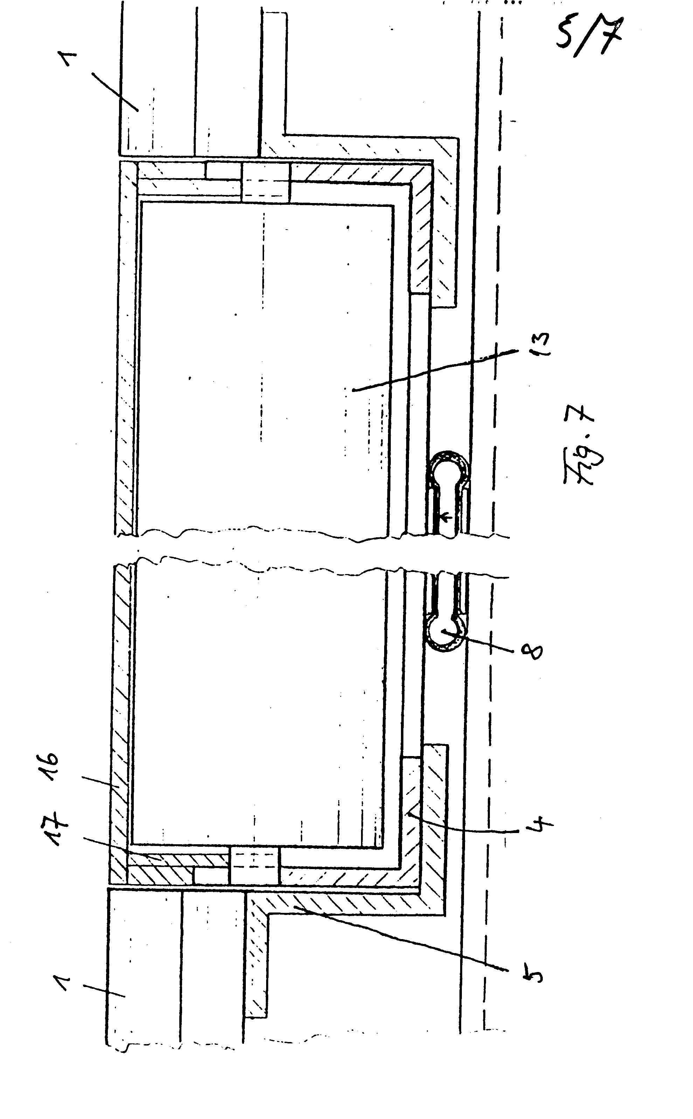

Fig. 5 zeigt Einzelheiten einer Transporteinrichtung 3 mit
in Ausnehmungen der Rahmenteile 4 gelagerten Rollen 13. Bei
diesem Ausführungsbeispiel ist ein Transportband 14 vorgesehen, das durch die Rollen 13 abgestützt wird. In der dargestellten Außerbetriebsstellung ist das Transportband 14 unter
der Ebene der Ladefläche 1 angeordnet. Nach Anheben der Rahmenteile 4 mit den Rollen 13 liegt das Transportband 14 über der
Ebene der Ladefläche 1.

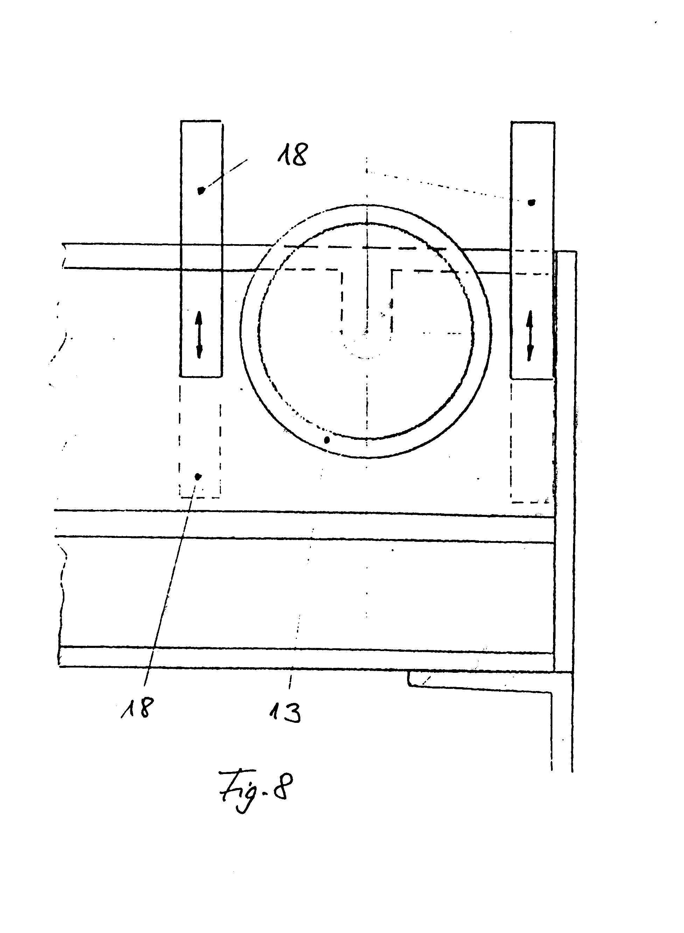

Fig. 6 zeigt eine weitere Ausführungsform, wobei zwischen den
einzelnen Rollen fest mit der Ladefläche verbundene Überbrük-
kungsabschnitte 15 vorgesehen sind, durch welche die Auflagefläche der Ladefläche 1 vergrößert wird. Auch in diesem Falle
werden durch Anheben der Rahmenteile 4 die darin gelagerten
Rollen 13 so weit angehoben, daß diese etwas über die Ebene
der Ladefläche 1 vorstehen, so daß das Ladegut auf den Rollen
gleiten kann. Die Ausführungsform nach Fig. 5 eignet sich
insbesondere für eine mit einem Antrieb versehene Transporteinrichtung, bei der durch einen Antriebsmotor das Transportband 14 bewegt wird, während bei der Ausführungsform nach Fig.6 eine Antriebseinrichtung entfallen kann.

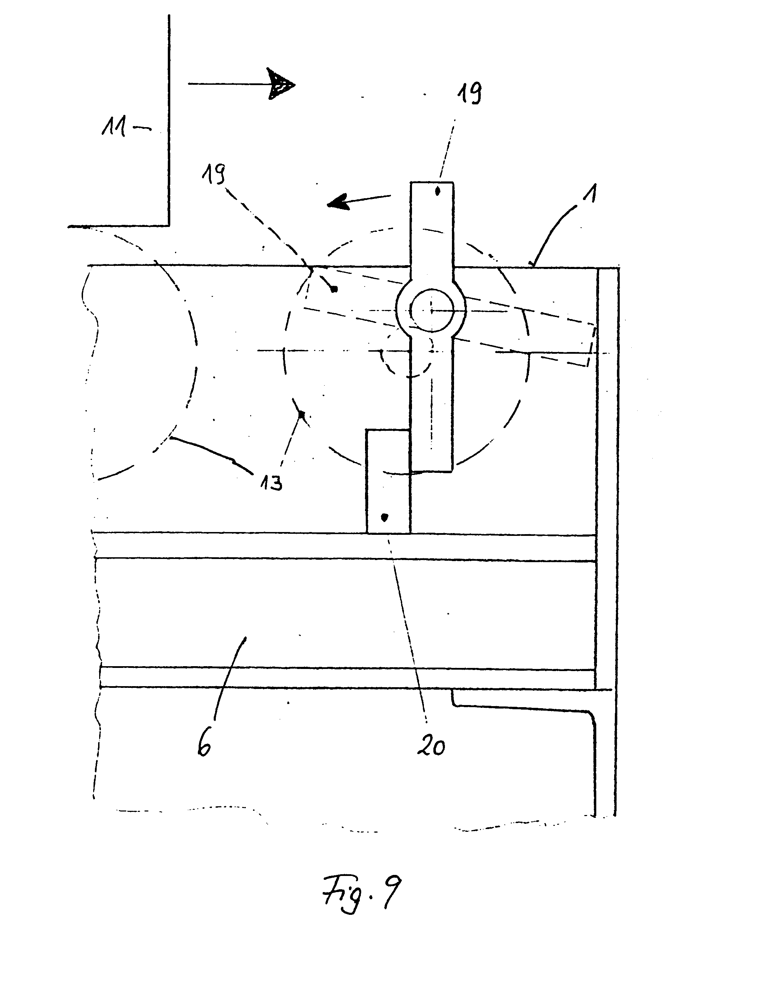

Bei der Anordnung nach Fig. 7 sind die Rollen 13 der Transporteinrichtung 3 mit einer Abdeckung 16 versehen, die in der dargestellten Außerbetriebsstellung der Transporteinrichtung in
einer Ebene mit der der Ladefläche 1 liegt. Mit 17 sind
Schenkel an der Abdeckung 16 bezeichnet, welche beispielsweise die Lagerzapfen der Rollen 13 übergreifen können und
auf diese Weise als Arretierung für die Abdeckung 16 dienen.

Fig. 8 zeigt eine Entladearretierung in der Form von Leisten
18, die beiderseits einer Rolle 13 am Ladeende der Ladefläche
angeordnet sind und durch eine beliebige Einrichtung über die
Ebene der Ladefläche 1 ausfahrbar sind, so daß beispielsweise
bei einem schrägstehenden Lkw das Ladegut nicht selbsttätig
bei angehobener Transporteinrichtung von der Ladefläche 1
gleiten kann.

Fig. 9 zeigt eine andere Ausführungsform einer solchen Absturzsicherung, wobei eine Leiste 19 außermittig an der Ladefläche
bzw. an den Rahmenteilen 4 gelagert ist, so daß durch das
größere Gewicht des längeren Schenkels die Leiste 19 selbsttätig in die dargestellte Sperrstellung schwenkt. Mit 20 ist
ein Anschlag bezeichnet. Diese Absturzsicherung kann beispielsweise mittels des Fußes in die Freigabestellung geschwenkt werden oder es kann auch eine Einrichtung vorgesehen werden, mittels der die Leiste 19 in der Freigabestellung arretiert werden kann.

Es sind verschiedene Abwandlungen der beschriebenen Bauweise
möglich. So können zumindest einzelne, etwa bandförmig ausgebildete Transporteinrichtungen auch ausfahrbar angeordnet
werden, so daß sie beispielsweise beim Be- und Entladen auf
eine Laderampe ausgefahren werden können, ähnlich der Darstellung in Fig. 3. Es ist auch möglich, die gesamte Ladefläche oder Abschnitte der Ladefläche relativ zu der Transporteinrichtung abzusenken, um letztere in die Betriebsstellung zu bringen. Dabei können ebenfalls pneumatische, hydraulische, mechanische oder elektrische Betätigungseinrichtungen vorgesehen werden.

Die beschriebene Vorrichtung wird vorzugsweise auf der Ladefläche von Lkw, Anhängern und dergleichen vorgesehen, es ist aber auch möglich, Lagerflächen in Hallen und dergleichen mit einer solchen Vorrichtung auszurüsten.

Anstelle einer beweglichen oder angetriebenen Transporteinrichtung in Form von Rollen, Gliederbändern, Ketten und dergleichen können auch Gleitkufen vorgesehen werden, die in der Transportstellung nicht beweglich sind.

Die beschriebene Vorrichtung ist insbesondere auch für größere Container geeignet.

Die Vorrichtung ermöglicht, insbesondere bei einer Ausführungsform beispielsweise nach Fig. 6 oder 7, die Beladung einer mit der Vorrichtung ausgestatteten Ladefläche wahlweise mittels des eingebauten Systems oder mit bekannten Fördermitteln wie Hubwagen, Gabelstapler oder dergleichen vorzunehmen.

NESTLER WELLPAPPE                                    40/em

## Ansprüche

1. Vorrichtung zum Transportieren von Stückgut, Paletten und dergleichen, mit einer Ladefläche für die Auflage des zu transportierenden Guts,
   d a d u r c h   g e k e n n z e i c h n e t,
   daß wenigstens auf einem Teil der Ladefläche (1) unter deren Ebene Transporteinrichtungen (3) angeordnet sind, die durch eine Relativbewegung zwischen Ladefläche (1) und Transporteinrichtung (3) über die Ebene der Ladefläche vorstehend angeordnet werden können.

2. Vorrichtung nach Anspruch 1,
   dadurch gekennzeichnet,
   daß die Transporteinrichtung bandförmig ausgebildet ist, wobei sich die einzelnen Bänder in einem Abstand voneinander über die Ladefläche (1) erstrecken.

3. Vorrichtung nach den Ansprüchen 1 und 2,
   dadurch gekennzeichnet,
   daß die Transporteinrichtung in Form von Rollen, Gliederbändern, Ketten oder dergleichen antreibbar ist.

4. Vorrichtung nach den Ansprüchen 1 bis 3,
   dadurch gekennzeichnet,
   daß die Transporteinrichtung in Form von Rollen (13) ausgebildet ist, die in Rahmenteilen (4) drehbar gelagert sind.

5. Vorrichtung nach Anspruch 4,
   dadurch gekennzeichnet,
   daß zwischen den einzelnen Rollen fest mit der Ladefläche (1) verbundene oder herausnehmbar angeordnete Überbrückungs-

abschnitte (15) angeordnet sind.

6. Vorrichtung nach den vorhergehenden Ansprüchen,
   dadurch gekennzeichnet,
   daß die Transporteinrichtung (3) insgesamt oder abschnittsweise durch eine Hubeinrichtung (8) über die Ladefläche (1)
   anhebbar ist.

7. Vorrichtung nach den vorhergehenden Ansprüchen,
   dadurch gekennzeichnet,
   daß am Ende der Ladefläche eine Absturzsicherung für das
   Ladegut in Form einer über die Ladefläche anhebbaren oder
   verschwenkbaren Leiste (18 bzw. 19) vorgesehen ist.

Fig.1

0214669

Fig. 2

11

3

10    9

Fig.3

7    10    1

12

Fig.4

1    14    V

4

13

Fig.5

Fig. 6

Fig.7

18

18          13

Fig. 8

Fig. 9